# EUROPEAN PATENT APPLICATION

(11) **EP 3 932 980 A1**
(43) Date of publication of application: **05.01.2022**
(21) Application number: 20767235.3
(22) Date of filing: 27.02.2020
(51) Int. Cl.: C08K 5/09, C08K 5/098, C08L 33/02

(54) **VISCOUS COMPOSITION**

(30) Priority: 01.03.2019 JP 2019037988
(71) Applicant: Sumitomo Seika Chemicals Co., Ltd., Kako-gun, Hyogo 675-0145 (JP)
(72) Inventor: YAMAGUCHI, Hirofumi, Himeji-shi, Hyogo 672-8076 (JP); UEZUMI, Chiaki, Himeji-shi, Hyogo 672-8076 (JP)
(74) Representative: Vossius & Partner Patentanwälte Rechtsanwälte mbB
(86) International application number: PCT/JP2020/007968
(87) International publication number: WO 2020/179601

(57) **Abstract**

Provided is a technique for preparing an excellent viscous composition with a pH of about 4 to 5.5 by using a copolymer obtained by polymerizing a (meth)acrylic acid, a (meth)acrylic acid alkyl ester having an alkyl group with 10 to 30 carbon atoms, and additionally, a compound with two or more ethylenically unsaturated groups. More specifically, provided is, for example, a viscous composition comprising (A) a copolymer obtained by polymerizing 100 parts by mass of a (meth)acrylic acid, 0.5 to 5 parts by mass of a (meth)acrylic acid alkyl ester having an alkyl group with 10 to 30 carbon atoms, and 0.001 to 0.2 parts by mass of a compound with two or more ethylenically unsaturated groups, (B) a carboxylic acid metal salt, and (C) a carboxylic acid; and having a pH of 4 to 5.5, and a viscosity of 1000 to 50000 mPa·s.

## Description

### Technical Field

The present disclosure relates to a viscous composition and the like.

### Background Art

Water-soluble copolymers containing carboxyl groups are used in various fields as a thickening agent for cosmetics etc., a moisturizer for poultices etc., a suspension stabilizer for emulsions, suspensions, etc., and a gelling base for batteries etc. Known methods for preparing a viscous composition that is thickened with a carboxyl-group-containing water-soluble copolymer typically comprise adding a carboxyl-group-containing water-soluble copolymer to water etc. to prepare a uniform dispersion, and then neutralizing the dispersion with an alkali so that the pH is adjusted to be in a weakly acidic pH range. The thus-obtained hydrous viscous composition is blended with a variety of additives according to the application to produce various products.

On the other hand, polyvalent metal salts are used as additives in various product fields. For example, magnesium ascorbate phosphate, which is a polyvalent metal salt, is used as a whitening agent, antioxidant, etc. in the fields of, for example, cosmetics and medicine. However, carboxyl-group-containing water-soluble copolymers typically have the problem that a portion thereof undergoes deposition when a polyvalent metal salt mentioned above is present, and the viscosity decreases. Thus, when a carboxyl-group-containing water-soluble copolymer is used for thickening, the types of additives that can be blended are limited.

To solve the above problem, methods that can prepare a thickening agent that is capable of forming a viscous composition with a high viscosity, even in the presence of a polyvalent metal salt, have also been studied. For example, Patent Literature (PTL) 1 discloses that "a viscous composition obtained by adjusting the pH of a liquid composition containing a specific alkyl-modified carboxyl group-containing water-soluble copolymer, a polyvalent metal salt and water to 7.0 or greater with a base, and then, adjusting the pH to 2.5 to 6.5 with a carboxylic acid and/or a phosphorus oxo acid can be imparted with high viscosity" (paragraph [0004] of PTL 1).

The Examples of PTL 1 disclose a viscous composition obtained by adjusting the pH of a liquid composition containing the alkyl-modified carboxyl-group-containing water-soluble copolymer obtained in Production Example 1, a polyvalent metal salt, and water to 7.0 or greater with a base, and then adjusting the pH to 2.5 to 6.5 with a carboxylic acid and/or a phosphorus oxo acid. The alkyl-modified carboxyl-group-containing water-soluble copolymer obtained in Production Example 1 is an alkyl-modified carboxyl-group-containing water-soluble copolymer obtained by polymerizing an acrylic acid and a (meth)acrylic acid alkyl ester having an alkyl group with 18 to 24 carbon atoms (i.e., BLEMMER VMA-70, produced by NOF Corporation, a mixture of 10 to 20 parts by mass of stearyl methacrylate, 10 to 20 parts by mass of eicosanyl methacrylate, 59 to 80 parts by mass of behenyl methacrylate, and 1 part by mass or less of tetracosanyl methacrylate) in a specific ratio.

### Citation List

### Patent Literature

PTL 1: WO 2014/021434

### Summary of Invention

### Technical Problem

The present inventors studied the preparation of a viscous composition using a copolymer obtained by polymerizing a (meth)acrylic acid, a (meth)acrylic acid alkyl ester having an alkyl group with 10 to 30 carbon atoms, and additionally, a compound with two or more ethylenically unsaturated groups, instead of the alkyl-modified carboxyl-group-containing water-soluble copolymer used in PTL 1. The present inventors then found that it was difficult to obtain an excellent viscous composition even when the pH of a liquid composition that contains this copolymer, a polyvalent metal salt, and water is adjusted with a base to 7.0 or greater, and then further adjusted with a carboxylic acid. In particular, it was difficult to obtain an excellent viscous composition when the pH was adjusted to about 4 to 5.5.

Therefore, the present inventors conducted further research for the technique for preparing an excellent viscous composition with a pH of about 4 to 5.5 by using the copolymer.

### Solution to Problem

The present inventors prepared an aqueous dispersion composition of the copolymer, and found the possibility of obtaining a viscous composition having a high viscosity by dissolving a carboxylic acid metal salt in this aqueous dispersion composition, and then dissolving a carboxylic acid, to adjust the pH to about 4 to 5.5. The inventors then made further improvements.

The present disclosure encompasses, for example, the subject matter described in the following items.
Item 1. A viscous composition comprising
   (A) a copolymer obtained by polymerizing 100 parts by mass of a (meth)acrylic acid, 0.5 to 5 parts by mass of a (meth)acrylic acid alkyl ester having an alkyl group with 10 to 30 carbon atoms, and 0.001 to 0.2 parts by mass of a compound with two or more ethylenically unsaturated groups,
   (B) a carboxylic acid metal salt, and
   (C) a carboxylic acid, and
      having a pH of 4 to 5.5, and
      a viscosity of 1000 to 50000 mPa·s.
Item 2. The viscous composition according to Item 1, wherein (A) is a copolymer obtained by polymerizing 100 parts by mass of a (meth)acrylic acid, 0.5 to 5 parts by mass of a (meth)acrylic acid alkyl ester having an alkyl group with 18 to 24 carbon atoms, and 0.001 to 0.2 parts by mass of a compound with two or more ethylenically unsaturated groups.
Item 3. The viscous composition according to Item 1 or 2, comprising (B) in an amount of 1 to 5 mass%.
Item 4. The viscous composition according to any one of Items 1 to 3, wherein the mass ratio of (A) and (B) contained in the viscous composition is 1:1 to 5.
Item 5. The viscous composition according to any one of Items 1 to 4, wherein the mass ratio of (A) and (C) contained in the viscous composition is 1:0.1 to 3.
Item 6. The viscous composition according to any one of Items 1 to 5, wherein the carboxylic acid of the carboxylic acid metal salt (B) and the carboxylic acid (C) are the same carboxylic acid.
Item 7. The viscous composition according to Item 6, wherein (B) is sodium citrate and (C) is citric acid.

### Advantageous Effects of Invention

Provided is a viscous composition with a high viscosity that comprises the specific copolymer mentioned above and a carboxylic acid metal salt, and that has a pH of about 4 to 5.5. Preferably, this composition is also relatively highly transparent.

### Description of Embodiments

Embodiments encompassed by the present disclosure are described in more detail below. The present disclosure preferably encompasses, for example, a viscous composition and a method for preparing a viscous composition. However, the present disclosure is not limited to these and encompasses everything disclosed in this specification and recognizable to those skilled in the art.

The viscous composition encompassed by the present disclosure comprises the following (A) to (C):
(A) a copolymer obtained by polymerizing 100 parts by mass of a (meth)acrylic acid, 0.5 to 5 parts by mass of a (meth)acrylic acid alkyl ester having an alkyl group with 10 to 30 carbon atoms, and 0.001 to 0.2 parts by mass of a compound with two or more ethylenically unsaturated groups;
(B) a carboxylic acid metal salt; and
(C) a carboxylic acid.

In this specification, the viscous composition encompassed by the present disclosure may be referred to as "the viscous composition of the present disclosure." As described below, the viscous composition of the present disclosure can be prepared by using, for example, a liquid composition that comprises (A) to (C) and water. When prepared in this manner, the viscous composition of the present disclosure further comprises water (D).

As stated above, (A) is a copolymer obtained by polymerizing 100 parts by mass of a (meth)acrylic acid, 0.5 to 5 parts by mass of a (meth)acrylic acid alkyl ester having an alkyl group with 10 to 30 carbon atoms, and 0.001 to 0.2 parts by mass of a compound with two or more ethylenically unsaturated groups (an alkyl-modified carboxyl-group-containing water-soluble copolymer).

In this specification, the term "(meth)acrylic" means acrylic and/or methacrylic. For the (meth)acrylic acid, either acrylic acid or methacrylic acid may be used alone, or used in combination.

The (meth)acrylic acid alkyl ester having an alkyl group with 10 to 30 (10, 11, 12, 13, 14, 15, 16, 17, 18, 19, 20, 21, 22, 23, 24, 25, 26, 27, 28, 29, or 30) carbon atoms refers to an ester of (meth)acrylic acid and a higher alcohol having an alkyl group with 10 to 30 carbon atoms. The carbon number of this alkyl group is more preferably, for example, 12 to 30, 14 to 28, 16 to 26, or 18 to 24. Examples of the (meth)acrylic acid alkyl ester include, but are not particularly limited to, esters of (meth)acrylic acid with stearyl alcohol, esters of (meth)acrylic acid with eicosanol, esters of (meth)acrylic acid with behenyl alcohol, and esters of (meth)acrylic acid with tetracosanol. Among these (meth)acrylic acid alkyl esters, stearyl methacrylate, eicosanyl methacrylate, behenyl methacrylate, and tetracosanyl methacrylate are preferred. These (meth)acrylic acid alkyl esters may be used alone, or in a combination of two or more. These (meth)acrylic acid alkyl esters for use may be commercial products, such as BLEMMER VMA-70, product name, produced by NOF Corporation.

The amount of the (meth)acrylic acid alkyl ester for use is 0.5 to 5 parts by mass, and preferably 0.5 to 4 parts by mass or 1 to 4 parts by mass, per 100 parts by mass of the (meth)acrylic acid.

Examples of the compound with two or more ethylenically unsaturated groups include but are not particularly limited to, a compound in which a polyol, such as ethylene glycol, propylene glycol, polyoxyethylene glycol, polyoxypropylene glycol, glycerol, polyglycerol, trimethylolpropane, pentaerythritol, saccharose, or sorbitol is substituted with two or more acrylic acid esters; a compound in which a polyol mentioned above is substituted with two or more allyl ethers; and diallyl phthalate, triallyl phosphate, allyl methacrylate, tetraallyloxyethane, triallyl cyanurate, divinyl adipate, vinyl crotonate, 1,5-hexadiene, divinyl benzene, and polyallylsaccharose. Among these, the compound with two or more ethylenically unsaturated groups is preferably pentaerythritol allyl ether (more preferably pentaerythritol triallyl ether or pentaerythritol tetraallyl ether), tetraallyloxyethane, triallyl phosphate, or polyallylsaccharose, since the use of a small amount of the resulting alkyl-modified carboxyl-group-containing water-soluble copolymer can produce a viscous composition with high thickening properties, and since high suspension stability can be imparted to emulsions, suspensions, etc. These compounds with two or more ethylenically unsaturated groups may be used alone, or in a combination of two or more.

The amount of the compound with two or more ethylenically unsaturated groups for use is 0.001 to 0.2 parts by mass per 100 parts by mass of the (meth)acrylic acid. The lower limit of this range may be, for example, 0.005, 0.01, 0.015, 0.02, 0.025, 0.03, 0.035, or 0.04. The upper limit of this range may be, for example, 0.15, 0.125, 0.1, or 0.075. For example, the amount for use is preferably 0.01 to 0.15 parts by mass, and more preferably 0.02 to 0.1 parts by mass, per 100 parts by mass of the (meth)acrylic acid.

In the production of the alkyl-modified carboxyl-group-containing water-soluble copolymer, the method of polymerizing (meth)acrylic acid, the (meth)acrylic acid alkyl ester, and the compound with two or more ethylenically unsaturated groups is not particularly limited. Examples include a method of polymerizing these in a polymerization solvent in the presence of a radical polymerization initiator.

Examples of the radical polymerization initiator include, but are not particularly limited to, α,α'-azobisisobutyronitrile, 2,2'-azobis-2,4-dimethylvaleronitrile, 2,2'-azobis methyl isobutyrate, benzoyl peroxide, lauroyl peroxide, cumene hydroperoxide, and tertiary butyl hydroperoxide. These radical polymerization initiators may be used alone, or in a combination of two or more.

The amount of the radical polymerization initiator for use is not particularly limited and is preferably, for example, 0.01 to 0.45 parts by mass, and more preferably 0.01 to 0.35 parts by mass, per 100 parts by mass of the (meth)acrylic acid. When the radical polymerization initiator is used in this range, the polymerization reaction speed can be appropriately controlled, making it possible to economically produce an alkyl-modified carboxyl-group-containing water-soluble copolymer.

The polymerization solvent is not particularly limited, and is preferably a solvent that dissolves (meth)acrylic acid, the (meth)acrylic acid alkyl ester, and the compound with two or more ethylenically unsaturated groups, and that does not dissolve the resulting alkyl-modified carboxyl-group-containing water-soluble copolymer. Specific examples of such polymerization solvents include normal pentane, normal hexane, normal heptane, normal octane, isooctane, cyclopentane, methylcyclopentane, cyclohexane, methylcyclohexane, benzene, toluene, xylene, chlorobenzene, ethylene dichloride, ethyl acetate, isopropyl acetate, ethyl methyl ketone, and isobutyl methyl ketone. Among these polymerization solvents, ethylene dichloride, normal hexane, normal heptane, and ethyl acetate are preferred from the standpoint of stable quality and easy availability. These polymerization solvents may be used alone, or in a combination of two or more.

The amount of the polymerization solvent for use is not particularly limited, and is preferably, for example, 200 to 10,000 parts by mass, and more preferably 300 to 2,000 parts by mass, per 100 parts by mass of the (meth)acrylic acid. The use of the polymerization solvent within this range suppresses aggregation of the alkyl-modified carboxyl-group-containing water-soluble copolymer even when the polymerization reaction proceeds, allowing stirring to be performed uniformly, and the polymerization reaction to proceed efficiently.

The atmosphere during the polymerization reaction is not particularly limited as long as the polymerization reaction can proceed. Examples include an inert gas atmosphere, such as nitrogen gas or argon gas.

The reaction temperature during the polymerization reaction is not particularly limited as long as the polymerization reaction can proceed, and is preferably, for example, 50 to 90°C, and more preferably 55 to 75°C. When the polymerization reaction is performed within this reaction temperature range, an increase in the reaction solution viscosity can be suppressed, and the reaction can be easily controlled; additionally, the bulk density of the resulting alkyl-modified carboxyl-group-containing water-soluble copolymer can be controlled.

The reaction time for the polymerization reaction cannot be generalized because it varies depends on the reaction temperature. The reaction time is typically 2 to 10 hours.

After completion of the reaction, for example, the reaction solution is heated to 80 to 130°C, and the polymerization solvent is removed, whereby a white fine powder of an alkyl-modified carboxyl-group-containing water-soluble copolymer can be isolated.

In the viscous composition of the present disclosure, the alkyl-modified carboxyl-group-containing water-soluble copolymers may be used alone, or in a combination of two or more.

The carboxylic acid in the carboxylic acid metal salt (B) may be a monovalent or multivalent (e.g., divalent, trivalent, or tetravalent) carboxylic acid. Specifically, for example, monocarboxylic acid, dicarboxylic acid, tricarboxylic acid, and tetracarboxylic acid are preferred. More specific examples include acetic acid, butyric acid, lactic acid, benzoic acid, gluconic acid, oxalic acid, malonic acid, succinic acid, glutaric acid, adipic acid, phytic acid, fumaric acid, maleic acid, tartaric acid, malic acid, phthalic acid, citric acid, and ethylenediaminetetraacetic acid.

Examples of the metal salt of the carboxylic acid metal salt (B) include those that form monovalent or multivalent (e.g., divalent, trivalent, or tetravalent) metal ions in an aqueous solution. Specific examples include sodium salts, potassium salts, magnesium salts, calcium salts, strontium salts, barium salts, radium salts, zinc salts, and aluminum salts.

Specifically, among the above, the carboxylic acid metal salt (B) is preferably, but not particularly limited to, for example, sodium acetate and sodium citrate (in particular, trisodium citrate).

The carboxylic acid metal salt (B) may be used alone, or in a combination of two or more.

The carboxylic acid (C) may be monovalent or multivalent (e.g., divalent, trivalent, or tetravalent). Specifically, for example, monocarboxylic acid, dicarboxylic acid, tricarboxylic acid, and tetracarboxylic acid are preferred. More specific examples include acetic acid, butyric acid, lactic acid, benzoic acid, gluconic acid, oxalic acid, malonic acid, succinic acid, glutaric acid, adipic acid, phytic acid, fumaric acid, maleic acid, tartaric acid, malic acid, phthalic acid, citric acid, and ethylenediaminetetraacetic acid.

Specifically, among the above, the carboxylic acid (C) is preferably, but not particularly limited to, for example, acetic acid and citric acid.

The carboxylic acid (C) may be used alone, or in a combination of two or more.

In the viscous composition of the present disclosure, (A) is preferably contained in an amount of, for example, about 0.1 to 5 mass%. The lower limit of the range may be, for example, 0.2, 0.3, 0.4, 0.5, 0.6, 0.7, 0.8, or 0.9 mass%. The upper limit of the range may be, for example, 4.5, 4, 3.5, 3, 2.5, 2, or 1.5. For example, (A) is more preferably contained in an amount of 0.2 to 4 mass%, and still more preferably 0.5 to 2 mass%.

In the viscous composition of the present disclosure, (B) is preferably contained in an amount of, for example, 1 to 5 parts by mass, more preferably 1.5 to 4.5 parts by mass, and still more preferably 2 to 4 parts by mass, per part by mass of (A). Further, in the viscous composition of the present disclosure, (B) is preferably contained in an amount of, for example, 1 to 5 mass%, more preferably 1.5 to 4.5 mass%, and still more preferably 2 to 4 mass%.

In the viscous composition of the present disclosure, (C) is preferably contained in an amount of, for example, 0.1 to 3 mass parts per mass, more preferably 0.2 to 2 parts by mass, and still more preferably 0.5 to 1.5 parts by mass, per part by mass of (A). Further, in the viscous composition of the present disclosure, (C) is preferably contained in an amount of, for example, 0.1 to 3 mass%, more preferably 0.2 to 2 mass%, and still more preferably 0.5 to 1.5 mass%.

The viscous composition of the present disclosure has a pH of 4 to 5.5. The lower limit of this range may be, for example, 4.1, 4.2, or 4.3, and the upper limit of this range may be, for example, 5.4, 5.3, 5.2, 5.1, 5, 4.9, 4.8, or 4.7. The pH value is measured using a pH meter at an ordinary temperature (25°C).

The viscous composition of the present disclosure has a viscosity of 1000 to 50000 mPa·s. The lower limit of this range may be, for example, 1500, 2000, 2500, or 3000 mPa·s, and the upper limit of this range may be, for example, 45000, 40000, 35000, 30000, or 28000 mPa·s. For example, the viscosity is more preferably about 2000 to 35000 mPa·s. The viscosity is measured at an ordinary temperature (25°C) using a Brookfield viscometer (model number: DV1MRVTJ0) at a rotation speed of 20 revolutions per minute. For rotors used in the measurement, rotor No. 3 is used for the viscosity of less than 2000 mPa·s, rotor No. 4 is used for the viscosity of 2000 mPa·s or more and less than 5000 mPa·s, rotor No. 5 is used for the viscosity of 5000 mPa·s or more and less than 15000 mPa·s, rotor No. 6 is used for the viscosity of 15000 mPa·s or more and less than 40000 mPa·s, and rotor No. 7 is used for the viscosity of 40000 mPa·s or more.

The viscous composition of the present disclosure is preferably highly transparent. More specifically, when the transmittance of ion-exchanged water is taken as 100%, the viscous composition of the present disclosure preferably has a transmittance of light with a wavelength of 425 nm of 80% or more, and more preferably 81, 82, 83, 84, 85, 86, 87, 88, 89, or 90% or more.

Although there is no limitation thereon, the viscous composition of the present disclosure preferably does not contain a basic component other than (B). Among these, the viscous composition of the present disclosure preferably does not contain a basic component for pH adjustment, and preferably does not contain one or more members selected from, in particular, sodium hydroxide, potassium hydroxide, calcium hydroxide, magnesium hydroxide, barium hydroxide, copper hydroxide, iron hydroxide, lithium hydroxide, beryllium hydroxide, triethanolamine, diisopropanolamine, 2-amino-2-methyl-1propanol, triethylamine, ethylamine, dimethylamine, diethylamine, trimethylamine, and ammonia.

The viscous composition of the present disclosure can be prepared by using, for example, a liquid composition that comprises (A), (B), and water (sometimes simply referred to below as "the liquid composition").

The content of (A) in the liquid composition may be set as appropriate according to the viscosity to be imparted to the viscous composition of the present disclosure, and is typically preferably 0.1 to 4 parts by mass, more preferably 0.1 to 3 parts by mass, and still more preferably 0.2 to 2 parts by mass, per 100 parts by mass of water.

The content of (B) in the liquid composition may also be set as appropriate according to the viscosity to be imparted to the viscous composition of the present disclosure, and is typically preferably 0.1 to 4 parts by mass, and more preferably 0.5 to 3 parts by mass, per 100 parts by mass of water.

In addition to (A), (B), and water, the liquid composition may comprise other additives and active ingredients according to the application of the viscous composition of the present disclosure.

Examples of the method for producing the liquid composition include, but are not particularly limited to, a method of dispersing (A) in water, and then adding (B); a method of dissolving (B) in water, and then adding and dispersing (A); and a method of mixing (A) and (B), and then adding the resulting mixture to water. Of these, a method of dispersing (A) in water, and then adding (B) is particularly preferred.

The pH of the liquid composition is typically about 2 to 5, although it also depends on the concentrations of the alkyl-modified carboxyl-group-containing water-soluble copolymer and the polyvalent metal salt.

In the liquid composition, (A) is typically present in a dispersed state, while (B) is present in a dissolved state. In addition, the liquid composition is typically in the state of a low-viscosity dispersion liquid since (A) is not thickened.

By further adding (C) to the liquid composition obtained in this manner and adjusting the pH to 4 to 5.5, the viscous composition of the present disclosure can be prepared.

In addition to the components described above, the viscous composition of the present disclosure may further comprise other additives and active ingredients according to its application. For example, when used as cosmetics, the viscous composition of the present disclosure may comprise a moisturizer, an antioxidant, a blood circulation stimulant, a cooling agent, an antiperspirant, a disinfectant, a skin activator, a deodorant, a surfactant, a fragrance, a dye, and the like. In particular, from the standpoint of eliminating stickiness to the skin and further improving the excellent feeling of smoothness, the viscous composition of the present disclosure, when used as cosmetics, preferably comprises, for example, a moisturizer, such as glycerol, propylene glycol, dipropylene glycol, 1,3-butylene glycol, polyethylene glycol, sorbitol, sodium lactate, sodium 2-pyrrolidone-5-carboxylate, sodium hyaluronate, and sodium acetylated hyaluronate.

When other additives or active ingredients are used to produce the viscous composition of the present disclosure, these additives and active ingredients may be added, for example, before or after adding (C) to the liquid composition.

The viscous composition of the present disclosure has the viscosity mentioned above, and is in the form of, for example, a viscous liquid, flowable gel, or cream.

The viscous composition of the present disclosure is used in the fields of, for example, cosmetics, pharmaceuticals (in particular, preparation for external use for skin), toiletry products, household products, and water-soluble paint. In particular, the viscous composition of the present disclosure, which has high viscosity, and which can impart a smooth and fresh feeling while suppressing stickiness when applied to the skin, is suitable for use in cosmetics, preparations for external use for skin, or toiletry products.

When the viscous composition of the present disclosure is used for cosmetics, the form of the formulation is not particularly limited. Examples include lotions, emulsions, serums, creams, cream pack, massage creams, hair-setting gels, sunscreens, styling gels, eyeliners, mascaras, lipsticks, and foundations. When the viscous composition of the present disclosure is used as a toiletry product, the form of the formulation is not particularly limited. Examples include cleansing creams, cleansing gels, facial cleansing foams, hair washes, body washes, and hair conditioners.

In this specification, the terms "comprising" and "containing" include "consisting essentially of" and "consisting of." Further, the present disclosure includes any combination of the constituent requirements described in this specification.

In addition, the various characteristics (properties, structures, functions, etc.) described in each embodiment of the present disclosure described above may be combined in any way in specifying the subjects included in the present disclosure. In other words, the present disclosure includes all the subjects comprising all combinations of the combinable characteristics described in this specification.

### Examples

The present disclosure is described in more detail below. However, the present disclosure is not limited to the following Examples.

### Measurement Methods

The viscosity, pH, and transmittance of the viscous compositions obtained in Examples and Comparative Examples below were evaluated according to the following methods.

### (1) Viscosity

After immersing an evaluation sample (each viscous composition, the same applies below) for 60 minutes or more in a constant-temperature water tank adjusted to 25°C, the viscosity was measured using a Brookfield viscometer (model number: DV1MRVTJ0) at 25°C after 1-minute rotation at a rotation speed of 20 revolutions per minute. For the measurement, rotor No. 3 was used for the viscosity of less than 2000 mPa·s, rotor No. 4 was used for the viscosity of 2000 mPa·s or more and less than 5000 mPa·s, rotor No. 5 was used for the viscosity of 5000 mPa·s or more and less than 15000 mPa·s, rotor No. 6 was used for the viscosity of 15000 mPa·s or more and less than 40000 mPa·s, and rotor No. 7 was used for the viscosity of 40000 mPa·s or more. A sample with a viscosity of 1000 mPa·s or more is capable of exhibiting the characteristic of not easily dripping during application, and thus can be evaluated to be an excellent, high-viscosity sample.

### (2) pH

The pH of the evaluation samples was measured at room temperature (25°C) using a pH meter (model number: D-51) produced by HORIBA, Ltd. Specifically, an electrode of the pH meter was inserted into the sample, and the MEAS key was pressed. When the HOLD display changed from flashing to lit, the displayed value was read and recorded.

### (3) Transmittance

The transmittance (%) of the evaluation sample was measured using a spectrophotometer (model number: UV-1850) produced by Shimadzu Corp. First, the sample was placed in a cell for UV measurement (optical path length: 1 cm) and defoamed in a centrifuge at 2,000 revolutions per minute for 5 minutes. If defoaming was not completed, the same operation was performed in the centrifuge to confirm that the foam was completely removed from the upper part of the sample. The sample was then placed in a spectrophotometer, and the transmittance was measured at a measurement wavelength of 425 nm. For the use of a viscous composition, the degree of transmittance is usually not a great concern. However, when used, in particular, for cosmetics, transparency and no cloudiness can be required. Thus, a higher transmittance is considered to be more preferable.

### Production Example 1

45 g (0.625 mol) of acrylic acid, 1.35 g of BLEMMER VMA-70 (produced by NOF Corporation, a mixture of 10 to 20 parts by mass of stearyl methacrylate, 10 to 20 parts by mass of eicosanyl methacrylate, 59 to 80 parts by mass of behenyl methacrylate, and 1 part by mass or less of tetracosanyl methacrylate), 0.02 g of pentaerythritol tetraallyl ether, 150 g of normal hexane, and 0.081 g (0.00035 mol) of 2,2'-azobis methyl isobutyrate were placed in a 500-mL four-necked flask equipped with a stirrer, a thermometer, a nitrogen blowing tube, and a cooling tube. Then, after the solution was stirred and mixed uniformly, nitrogen gas was blown into the solution to remove oxygen present in the upper space of the reaction vessel (four-necked flask), and in the raw material and the solvent. Then, the mixture was reacted for 4 hours in a nitrogen atmosphere while the temperature was maintained at 60 to 65°C. After completion of the reaction, the resulting slurry was heated to 90°C to distill off the normal hexane, and further dried under reduced pressure for 8 hours (110°C, 10 mmHg) to thus obtain 43 g of a white fine powder of an alkyl-modified carboxyl-group-containing water-soluble copolymer. This copolymer is sometimes referred to below as "the polymer of Production Example 1."

### Production Example 2

45 g (0.625 mol) of acrylic acid, 0.27 g of pentaerythritol tetraallyl ether, 150 g of n-hexane, and 0.081 g (0.00035 mol) of 2,2'-azobis methyl isobutyrate were placed in a 500-mL four-necked flask equipped with a stirrer, a thermometer, a nitrogen blowing tube, and a cooling tube, to prepare a reaction liquid. After the reaction liquid was stirred, and each raw material was mixed uniformly, nitrogen gas was blown into the solution to remove oxygen present in the upper space of the reaction vessel, and in the raw material and the solvent. Thereafter, the reaction liquid was reacted for 4 hours in a nitrogen atmosphere while the temperature was maintained at 60 to 65°C. After completion of the reaction, the resulting slurry was heated to 90°C to distill off the n-hexane, and further dried under reduced pressure for 8 hours (110°C, 10 mmHg) to thus obtain 42 g of a carboxyvinyl polymer. This carboxyvinyl polymer is sometimes referred to below as "the polymer of Production Example 2."

### Production Example 3

40 g of acrylic acid, 0.4 g of BLEMMER VMA-70 (produced by NOF Corporation, a mixture of 10 to 20 parts by mass of stearyl methacrylate, 10 to 20 parts by mass of eicosanyl methacrylate, 59 to 80 parts by mass of behenyl methacrylate, and 1 mass% or less of tetracosanyl methacrylate), 0.19 g of pentaerythritol tetraallyl ether, 0.116 g of 2,2'-azobis(methyl isobutyrate), and 230.9 g of normal hexane were placed in a 500-mL four-necked flask equipped with a stirrer, a thermometer, a nitrogen blowing tube, and a cooling tube. Then, after the solution was stirred and mixed uniformly, nitrogen gas was blown into the solution to remove oxygen present in the upper space of the reaction vessel (four-necked flask), and in the raw material and the reaction solvent. Subsequently, the mixture was heated to 60 to 65°C in a nitrogen atmosphere. The temperature was then maintained at 60 to 65°C for 3 hours. When the mixture was maintained at 60 to 65°C for about one hour, a mixture obtained by dissolving 1.6 g of a block copolymer of 12-hydroxystearic acid and polyoxyethylene (Hypermer B246, produced by Croda) in 2.0 g of normal hexane was added to the reaction vessel. Thereafter, the resulting slurry was heated to 100°C to distill off the normal hexane, and further dried under reduced pressure for 8 hours (115°C, 10 mmHg) to thus obtain 39 g of a white fine powder of an alkyl-modified carboxyl-group-containing water-soluble copolymer. This copolymer is sometimes referred to below as "the polymer of Production Example 3."

### Preparation of 3% Aqueous Dispersion of Polymer

291 g of ion-exchanged water was measured into a 500-ml plastic beaker equipped with a disperser (diameter: 4 cm, height: 1 cm), and 9 g of the polymer of Production Example 1, 2, or 3 was gradually added while stirring at 1,000 rpm. After the addition, the stirring speed was set at 2,500 rpm, and stirring was continued for one hour to thus obtain a 3% (mass%) aqueous dispersion of polymer.

### Preparation of Viscous Composition

### Example 1

3.0 g of trisodium citrate dihydrate (produced by Wako Pure Chemical Co., Ltd.) was dissolved in 51.7 g of ion-exchanged water.

33.3 g of the 3% aqueous dispersion of polymer obtained in Production Example 1 was measured into a 300-ml plastic beaker equipped with a disperser (diameter: 4 cm, height: 1 cm), the entire amount of the aqueous sodium citrate solution was added with stirring, and the mixture was stirred until uniform. Then, 12.0 g of a 10% aqueous solution of citric acid was added thereto, and the mixture was stirred until uniform, thus obtaining 100 g of a viscous composition.

33.3 g of the 3% aqueous dispersion of polymer contained about 1 g of polymer; thus, the concentration of the polymer of Production Example 1 in the viscous composition was about 1 mass%. For the other components and for the following Examples, the concentration (mass%) can be calculated in the same manner.

### Example 2

100 g of a viscous composition was obtained in the same manner as in Example 1, except that the amount of ion-exchanged water was changed to 50.3 g, the amount of the 3% aqueous dispersion of polymer of Production Example 1 was changed to 36.7 g, and the amount of the 10% aqueous solution of citric acid was changed to 10.0 g.

### Example 3

100 g of a viscous composition was obtained in the same manner as in Example 1, except that the amount of ion-exchanged water was changed to 47.0 g, the amount of the 3% aqueous dispersion of polymer of Production Example 1 was changed to 40.0 g, and the amount of the 10% aqueous solution of citric acid was changed to 10.0 g.

### Example 4

100 g of a viscous composition was obtained in the same manner as in Example 1, except that the amount of ion-exchanged water was changed to 37.0 g, the amount of the 3% aqueous dispersion of polymer of Production Example 1 was changed to 50.0 g, and the amount of the 10% aqueous solution of citric acid was changed to 10.0 g.

### Example 5

100 g of a viscous composition was obtained in the same manner as in Example 1, except that the amount of the trisodium citrate dihydrate was changed to 2.0 g, the amount of ion-exchanged water was changed to 54.7 g, and the amount of the 10% aqueous solution of citric acid was changed to 10.0 g.

### Example 6

100 g of a viscous composition was obtained in the same manner as in Example 1, except that the trisodium citrate dihydrate was replaced with sodium acetate (a special grade reagent, produced by Wako Pure Chemical Industries, Ltd.).

### Comparative Example 1

100 g of a viscous composition was obtained in the same manner as in Example 1, except that the 3% aqueous dispersion of polymer of Production Example 1 was replaced with the 3% aqueous dispersion of polymer of Production Example 2.

### Comparative Example 2

100 g of a viscous composition was obtained in the same manner as in Example 1, except that the 3% aqueous dispersion of polymer of Production Example 1 was replaced with the 3% aqueous dispersion of polymer of Production Example 3.

### Comparative Example 3

100 g of a viscous composition was obtained in the same manner as in Example 1, except that the amount of ion-exchanged water was changed to 37.2 g, and the amount of the 10% aqueous solution of citric acid was changed to 20.0 g, and except that 6.5 g of a 6% aqueous solution of sodium hydroxide was added before adding the 10% aqueous solution of citric acid, and the resulting mixture was stirred until uniform, so that the pH was once adjusted to 7 or greater and then returned to acidic.

When observed, the obtained viscous composition was non-uniform.

### Comparative Example 4

100 g of a viscous composition was obtained in the same manner as in Example 1, except that the trisodium citrate dihydrate was replaced with sodium chloride (a special grade reagent manufactured by Nacalai Tesque, Inc.).

When observed, the obtained viscous composition was non-uniform.

### Comparative Example 5

100 g of a viscous composition was obtained in the same manner as in Example 1, except that the trisodium citrate dihydrate was replaced with (+)-sodium L-ascorbate (a special grade reagent manufactured by Wako Pure Chemical Industries, Ltd.).

Table 1 shows the measurement results of the viscosity, the transmittance, and the pH of the viscous compositions prepared in the Examples and Comparative Examples.

**Table 1**

| | Polymer | 3% Aqueous dispersion of polymer (g) | Trisodium citrate dihydrate (g) | Sodium acetate (g) | Sodium chloride (g) | Sodium ascorbate (g) | 10% Aqueous solution of citric acid (g) | 6% Aqueous solution of sodium hydroxide (g) | Ion-exchanged water (g) | Viscosity (mPa·s) | Transmittance (%) | pH |
|---|---|---|---|---|---|---|---|---|---|---|---|---|
| Ex. 1 | Polymer of Production Example 1 | 33.3 | 3.0 | - | - | - | 12.0 | - | 51.7 | 6,560 | 97.0 | 4.5 |
| Ex. 2 | Polymer of Production Example 1 | 36.7 | 3.0 | - | - | - | 10.0 | - | 50.3 | 14,250 | 93.2 | 4.5 |
| Ex. 3 | Polymer of Production Example 1 | 40.0 | 3.0 | - | - | - | 10.0 | - | 47.0 | 17,450 | 93.1 | 4.5 |
| Ex. 4 | Polymer of Production Example 1 | 50.0 | 3.0 | - | - | - | 10.0 | - | 37.0 | 25,800 | 96.9 | 4.5 |
| Ex. 5 | Polymer of Production Example 1 | 33.3 | 2.0 | - | - | - | 10.0 | - | 54.7 | 3,460 | 97.4 | 4.3 |
| Ex. 6 | Polymer of Production Example 1 | 33.3 | - | 3.0 | - | - | 12.0 | - | 51.7 | 6,400 | 88.2 | 4.7 |
| Com. Ex. 1 | Polymer of Production Example 2 | 33.3 | 3.0 | - | - | - | 12.0 | - | 51.7 | 580 | 16.4 | 4.3 |
| Com. Ex. 2 | Polymer of Production Example 3 | 33.3 | 3.0 | - | - | - | 12.0 | - | 51.7 | 80 | 7.8 | 4.3 |
| Com. Ex. 3 | Polymer of Production Example 1 | 33.3 | 3.0 | - | - | - | 20.0 | 6.5 | 37.2 | Non-uniform and unmeasurable | Transparent | 4.0-4.5 |
| Com. Ex. 4 | Polymer of Production Example 1 | 33.3 | - | - | 3.0 | - | 12.0 | - | 51.7 | Separated and unmeasurable | - | - |
| Com. Ex. 5 | Polymer of Production Example 1 | 33.3 | - | - | - | 3.0 | 12.0 | - | 51.7 | 200 | 86.1 | 3.91 |

## Claims

1. A viscous composition comprising
(A) a copolymer obtained by polymerizing 100 parts by mass of a (meth)acrylic acid, 0.5 to 5 parts by mass of a (meth)acrylic acid alkyl ester having an alkyl group with 10 to 30 carbon atoms, and 0.001 to 0.2 parts by mass of a compound with two or more ethylenically unsaturated groups,
(B) a carboxylic acid metal salt, and
(C) a carboxylic acid, and
having a pH of 4 to 5.5, and
a viscosity of 1000 to 50000 mPa·s.

2. The viscous composition according to claim 1, wherein (A) is a copolymer obtained by polymerizing 100 parts by mass of a (meth)acrylic acid, 0.5 to 5 parts by mass of a (meth)acrylic acid alkyl ester having an alkyl group with 18 to 24 carbon atoms, and 0.001 to 0.2 parts by mass of a compound with two or more ethylenically unsaturated groups.

3. The viscous composition according to claim 1 or 2, comprising (B) in an amount of 1 to 5 mass%.

4. The viscous composition according to any one of claims 1 to 3, wherein the mass ratio of (A) and (B) contained in the viscous composition is 1:1 to 5.

5. The viscous composition according to any one of claims 1 to 4, wherein the mass ratio of (A) and (C) contained in the viscous composition is 1:0.1 to 3.

6. The viscous composition according to any one of claims 1 to 5, wherein the carboxylic acid of the carboxylic acid metal salt (B) and the carboxylic acid (C) are the same carboxylic acid.

7. The viscous composition according to claim 6, wherein (B) is sodium citrate and (C) is citric acid.
